# EUROPÄISCHE PATENTANMELDUNG

(11) **EP 3 061 649 A1**
(43) Veröffentlichungstag der Anmeldung: **31.08.2016**
(21) Anmeldenummer: 16000325.7
(22) Anmeldetag: 10.02.2016
(51) Int. Cl.: B60P 7/08, B65D 90/48

(54) **FAHRZEUGAUFBAU**

(30) Priorität: 25.02.2015 DE 102015002380
(71) Anmelder: Fahrzeugwerk Krone Beteiligungs-GmbH, 48480 Spelle (DE)
(72) Erfinder: Müller, Berthold, D - 49757 Werlte (DE); Finner, Wolfgang, D - 49757 Werlte (DE)
(74) Vertreter: Pott, Ulrich

(57) **Zusammenfassung**

Die Erfindung bezieht sich auf einen Fahrzeugaufbau 1 mit einem sich oberhalb eines Laderaumbodens erstreckenden Laderaumes 12, der durch Stirnwände 4, 5, Seitenwände und/oder eine bewegbare Schiebeplane 13 begrenzbar ist und der im Bereich von Seitenwänden und/oder von seitlichen Schiebeplanen 13 Außenbaumprofile 9, 10 aufweist, die an Eckrungen 6, 7 und/oder Seitenrungen 8 abgestützt sind, und mit zumindest einer Erkennungseinrichtung 17 zur Identifizierung des Ladegutes 14, 15 innerhalb des Laderaumes 12. Um mit verringertem Bauaufwand eine verbesserte Ladeguterkennung durchführen zu können, ist vorgesehen, dass die zumindest eine Erkennungseinrichtung 17 translatorisch bewegbar in oder an einer schienenartigen Führungsvorrichtung 16 im Laderaum 12 gehaltert ist (Fig. 1).

## Beschreibung

Die Erfindung bezieht sich auf einen Fahrzeugaufbau mit einem sich oberhalb eines Laderaumbodens erstreckenden Laderaumes, der durch Stirnwände, Seitenwände und/oder eine bewegbare Schiebeplane begrenzbar ist und der im Bereich von Seitenwänden und/oder von seitlichen Schiebeplanen Außenbaumprofile aufweist, die an Eckrungen und/oder Seitenrungen abgestützt sind, und mit zumindest einer Erkennungseinrichtung zur Abbildung des Ladegutes innerhalb des Laderaumes.

Fahrzeugaufbauten der vorgenannten Art sind bekannt und haben je nach Einsatzzweck des Fahrzeugaufbaus sich zwischen Stirnwänden erstreckende Seitenwände oder auch zwischen Stirnwänden erstreckende bewegbare Schiebeplanen. Vielfach sind die Aufbauten mit Seiten- und Eckrungen ausgerüstet. Gemeinsam ist solchen Fahrzeugaufbauten, dass sie einen Laderaum aufweisen, in dem das Ladegut zu transportieren ist. Je nach Gestaltung des Ladegutes ist dabei der Laderaum ausgenutzt.

Zur beförderungssicheren Verladung gehört jedoch bei jedem Fahrzeugaufbau das sichere Stapeln, Stauen, Verzurren, Verkeilen, Verspannen und/oder Sichern des Ladegutes derart, dass bei normaler vertragsgemäßer Beförderung auch in verkehrlich bedingten Extremsituationen durch Lageveränderung des Fahrzeugaufbaus weder das Ladegut noch der Fahrzeugaufbau beschädigt werden darf und auch das Ladegut durch ein Verrutschen des Ladegutes keine verkehrlichen Risiken verursachen darf. Der Fahrzeugaufbau muss daher unter Beachtung von vorgeschriebenen Abmessungen, Gewichten und Achslasten in der Lage sein, das Ladegut verkehrssicher zu transportieren.

Es ist inzwischen bekannt geworden, Fahrzeugaufbauten mit ortsfest montierten Sensoren auszurüsten, die an dem Ladegut oder an geeigneten Teilen im Laderaum befestigt sind. Dazu ist, um das Ladegut zu identifizieren, eine Vielzahl von Sensoren als Erkennungseinrichtungen zu verbauen, um es zu ermöglichen, beispielsweise eine dreidimensionelle Darstellung des Laderaumes und/oder des Ladegutes für einen Fahrzeugführer visionell wahrnehmbar darzustellen. Die bekannten Lösungen mit der Vielzahl von fest angebauten Sensoren sind bauaufwändig und erfordern eine Vielzahl von Übertragungsmitteln, um die ermittelten Daten an eine Datenverarbeitungseinrichtung zu übermitteln. Dies kann im Einzelfall wiederum Schäden an Sensoren zum Beispiel bei Entlade- oder Beladungsvorgängen verursachen.

Es ist Aufgabe der vorliegenden Erfindung, einen Fahrzeugaufbau der eingangs genannten Art zur Verfügung zu stellen, bei dem mittels einer Erkennungseinrichtung individuell die Beladung des Fahrzeuges mit verringertem Bauaufwand ermittelbar ist.

Zur Lösung dieser Aufgabe zeichnet sich der Fahrzeugaufbau der eingangs genannten Art dadurch aus, dass die Erkennungseinrichtung translatorisch bewegbar in oder an einer schienenartigen Führungsvorrichtung im Laderaum gehaltert ist.

Damit ist ein Fahrzeugaufbau zur Verfügung gestellt, bei dem die Erkennungseinrichtung entlang der Führungsvorrichtung bewegt werden kann, beispielsweise verfahren werden kann, und zwar je nach Aufbau der entsprechenden Führungsvorrichtung oder mehrerer Führungsvorrichtungen zu beiden Seiten eines Fahrzeugaufbaus, um beispielsweise seitliche Bereiche des Laderaumes zu überwachen und um Ladegut zu identifizieren bzw. dreidimensional abzubilden, aber auch quer zur Längsrichtung des Laderaumes und auch in vertikaler Richtung, so dass über die gesamte Länge eines Laderaumes mit einer oder mit mehreren Erkennungseinrichtung(en) das Ladegut exakt zu vermessen, bildlich darzustellen und damit auch zu überwachen ist. Diese Überwachung kann per Telematik an den Fahrer, an einem Kunde und/oder ein Überwachungsunternehmen übermittelt werden, um zum Beispiel dort ausgewertet zu werden. Dies kann auch während der Fahrt erfolgen, um z.B. ein Verrutschen des Ladegutes und/oder einen Diebstahl zu identifizieren. Darüber hinaus ist es möglich, auch Ladegüter abzubilden, die beispielsweise eine geringere Ladeguthöhe aufweisen als ein benachbart angeordnetes Ladegut. Somit ist vermieden, dass dieses Ladegut im Schattenbereich eines anderen höheren Ladegutes durch eine fest montierte Erkennungsvorrichtung nicht identifiziert wird.

Die Führungsvorrichtungen können an Seitenwänden, an Rungen, an Außenbäumen und/oder an Stirnwänden oder auch im Deckenbereich des Fahrzeugaufbaus vorgesehen sein mit jeweils einer Erstreckung, die die gewünschte Ausrichtung der Fahrstrecke darstellen können. Es können Laserscanner, Polygonscanner, 3-D-Kameras oder ähnliche Geräte Verwendung finden, die mit einer Datenverarbeitungseinrichtung und einer entsprechenden Software zusammenarbeiten, um den Laderaum entsprechend abzubilden.

Bevorzugterweise sind transparente Kunststoffröhren als Führungsvorrichtungen vorgesehen, die die translatorisch verfahrbare Erkennungseinrichtung aufnehmen. Dabei kann die Erkennungseinrichtung eine Art Kolben haben, der innerhalb der Kunststoffröhre entlanggleitet und Kolbenflächen aufweist, die von einem Druckmittel, beispielsweise Druckluft beaufschlagbar sind. Dies kann ein Überdruck oder ein Unterdruck sein, um die Erkennungseinrichtung in Bewegung zu versetzen. Zudem besteht die Möglichkeit, die Erkennungseinrichtung mittels EMF (Elektromagnetische Schweben), Lang-Kurz-Statorantrieben oder mittels der Lufttransporttechnik zu verfahren. Zudem ist es möglich, dass jeweils an Endbereichen der Führungsvorrichtung, beispielsweise der Kunststoffröhre, jeweilige Dockingstationen ausgebildet sind, in die Kontakte der Erkennungseinrichtung einfahren. Über diese Kontakte können dann Daten der jeweiligen Erkennungseinrichtung über die Dockingstation an eine Datenverarbeitungseinrichtung weitergegeben werden. Zudem ist es möglich, über eine solche Dockingstation die Erkennungseinrichtung mit Strom zu versorgen, um beispielsweise einen Akku einer Erkennungseinrichtung wiederum aufzuladen. Die Datenübertragung könnte eines mittels eigens aufgebauten lokalen eventuell propiretären Funknetzwerkes stattfinden, wobei die Dockingstation zum Beispiel mittels Induktion die Erkennungseinrichtung mit Energie versorgt. Zudem könnte die Datenübertragung mittels Kabel oder Schleifverbindungskontakten erfolgen, wobei dann keine Dockingstation erforderlich wäre.

Alternativ ist es selbstverständlich auch möglich, die Erkennungseinrichtung an Schienen entlanggleiten zu lassen, beispielsweise metallischen Schienen, und für die Bewegung einen elektromotorischen oder sonstigen Antrieb vorzusehen.

Zur weiteren Erläuterung der Erfindung wird auf weitere Unteransprüche, die nachfolgende Beschreibung und die Zeichnung verwiesen. In der Zeichnung zeigen:

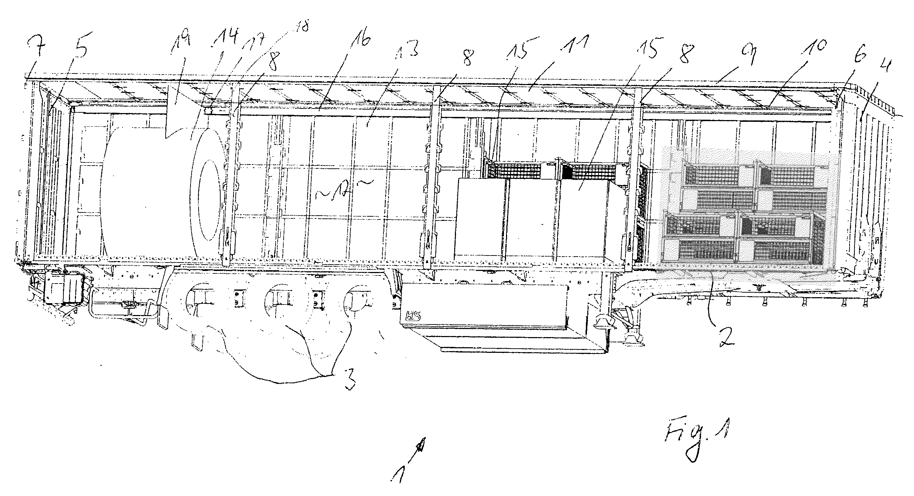

- Fig. 1 und Fig. 2: jeweils in perspektivischer Ansicht ein Ausführungsbeispiel eines Nutzfahrzeugaufbaus mit jeweils geöffneten Seitenwänden mit unterschiedlicher Lagepositionierung der Erkennungseinrichtung an verschiedenen Ladegutstücken, und
- Fig. 3: eine aufgebrochene Schnittdarstellung durch eine Kunststoffröhre als Führungsvorrichtung mit integrierter Erkennungseinrichtung und Dockingstationen.

In der Zeichnung sind übereinstimmende Teile mit übereinstimmenden Bezugsziffern versehen.

Allgemein mit 1 ist in der Zeichnung ein Nutzfahrzeugaufbau beziffert mit einem Fahrgestell 2, Rädern 3, Stirnwänden 4 und 5, Eckrungen 6 und 7, Seitenrungen 8, Außenbaumprofilen 9 und 10 sowie einer Aufbaudecke 11. Die zuvor genannten Teile umgrenzen einen allgemein mit 12 bezifferten Laderaum. In dem Ausführungsbeispiel ist als Seitenwandung eine Schiebeplane 13 vorgesehen. Innerhalb des Laderaumes sind Ladegüter bevorratet, beispielsweise in Gestalt eines Coils 14 oder von kastenförmigen Transportgütern 15 mit jeweils unterschiedlicher Höhengestalt. An dem in der Zeichnung hinteren Außenbaum 10 ist eine Führungsvorrichtung 16 in Gestalt einer transparenten Kunststoffröhre angeordnet, innerhalb der ein Laserscanner 17 als Erkennungseinrichtung entsprechend den Pfeilen 18 translatorisch hin und her beweglich geführt ist. Dieser erstreckt sich somit in Längsrichtung des Fahrzeugaufbaus 1, und zwar von der vorderen Stirnwand 4 bis hin zur hinteren Stirnwand 5, die als aufschwenkbare Hecktüren ausgebildet ist. Dabei erzeugt dieser Laserscanner 17 an dem Coil 14 einen Scan, wie es mit 19 veranschaulicht ist.

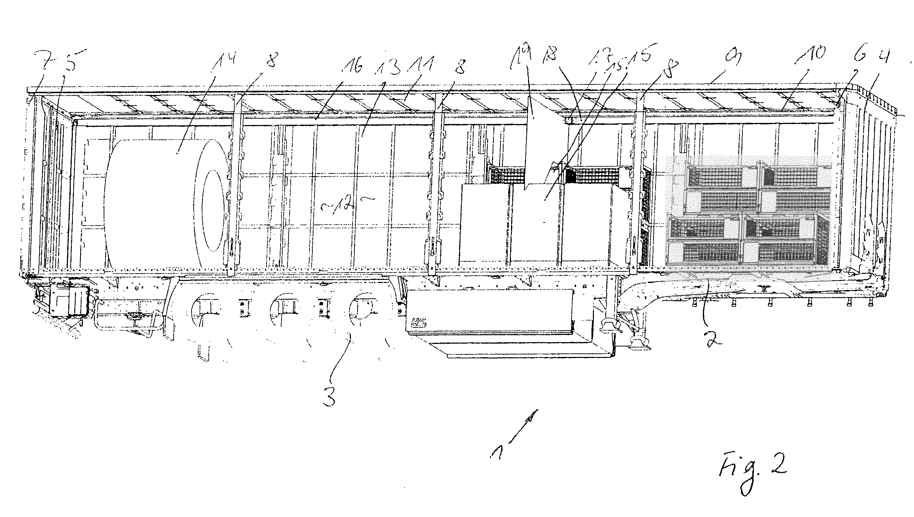

Fig. 2 zeigt eine andere Lagepositionierung des Laserscanners 17, in der er translatorisch in Richtung auf die Vorderwand 4 hin zu bewegt ist und an den Ladegutteilen 15 einen entsprechenden Scan 19 erstellt.

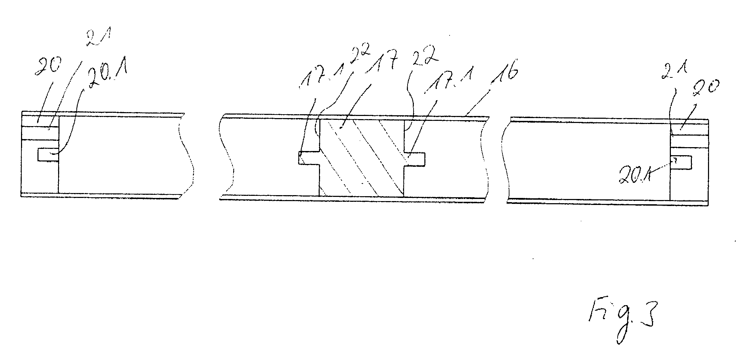

Fig. 3 zeigt die Kunststoffröhre 16 als Führungsvorrichtung, die transparent ausgebildet ist und in der zum Beispiel ein Laserscanner 17 bewegbar geführt ist. Dieser ist innerhalb der Kunststoffröhre 16 translatorisch verfahrbar und hat Anschlussstücke 17.1, die in entsprechende Aufnahmen 20.1 einer jeweiligen Dockingstation 20 einfahren können. Über die Dockingstationen 20 kann Druckluft in die Röhre 16 über Anschlussverbindungen 21 eingebracht werden. Druckluft kann die entsprechenden Kolbenflächen 22 der Erkennungseinrichtung 17 beaufschlagen, so dass eine Hin- und Herbewegung der Erkennungseinrichtung 17 innerhalb der Kunststoffröhre 16 über die Druckluftbeaufschlagung ermöglicht ist.

## Patentansprüche

1. Fahrzeugaufbau (1) mit einem sich oberhalb eines Laderaumbodens erstreckenden Laderaumes (12), der durch Stirnwände (4, 5), Seitenwände und/oder eine bewegbare Schiebeplane (13) begrenzbar ist und der im Bereich von Seitenwänden und/oder von seitlichen Schiebeplanen (13) Außenbaumprofile (9, 10)aufweist, die an Eckrungen (6, 7) und/oder Seitenrungen (8) abgestützt sind und mit zumindest einer Erkennungseinrichtung (17) zur Identifizierung des Ladegutes (14, 15) innerhalb des Laderaumes (12), **dadurch gekennzeichnet, dass** die zumindest eine Erkennungseinrichtung (17) translatorisch bewegbar in oder an einer schienenartigen Führungsvorrichtung (16) im Laderaum (12) gehaltert ist.

2. Fahrzeugaufbau (1) nach Anspruch 1, **dadurch gekennzeichnet, dass** die zumindest eine Erkennungseinrichtung (17) in vertikaler und/oder horizontaler Ausrichtung innerhalb des Laderaumes (12) entlang von einer oder mehreren Führungseinrichtung(en) (16) translatorisch verfahrbar ist.

3. Fahrzeugaufbau (1) nach Anspruch 1 oder 2, **dadurch gekennzeichnet, dass** als Erkennungseinrichtung (17) ein Laserscanner, ein Polygonscanner und/oder eine 3-D-Kamera vorgesehen ist.

4. Fahrzeugaufbau (1) nach einem der Ansprüche 1 bis 3, **dadurch gekennzeichnet, dass** zumindest zwei Erkennungsvorrichtungen (17) vorgesehen sind, die an Aufbauaußenbaumprofilen (9, 10) und/oder Seitenrungen (8) und/oder Eckrungen (6, 7) und/oder Seitenwänden und/oder Stirnwänden (4, 5) und/oder einer Fahrzeugaufbaudecke (11) translatorisch verfahrbar gehaltert sind.

5. Fahrzeugaufbau (1) nach einem der Ansprüche 1 bis 4, **dadurch gekennzeichnet, dass** die Führungsvorrichtung (16) als Führungsschienenbahn ausgebildet ist.

6. Fahrzeugaufbau nach Anspruch 5, **dadurch gekennzeichnet, dass** eine Führungsschienenbahn als transparente Kunststoffröhre ausgebildet ist.

7. Fahrzeugaufbau (1) nach Anspruch 6, **dadurch gekennzeichnet, dass** die Erkennungseinrichtung (17) innerhalb der Kunststoffröhre (16) mittels Druckluft oder mittels Vakuum hin und her verfahrbar ausgebildet ist.

8. Fahrzeugaufbau (1) nach einem der Ansprüche 5 oder 6, **dadurch gekennzeichnet, dass** die Erkennungseinrichtung (17) mittels eines elektromotorischen Antriebes translatorisch verfahrbar ausgebildet ist.

9. Fahrzeugaufbau (1) nach einem der Ansprüche 5 bis 8, **dadurch gekennzeichnet, dass** die Erkennungseinrichtung (17) zwischen Dockingstationen (20) hin und her bewegbar ist und von den Dockingstationen (20) die Daten der Erkennungseinrichtung (17) an eine Datenverarbeitungseinrichtung übermittelbar sind.

10. Fahrzeugaufbau (1) nach Anspruch 9, **dadurch gekennzeichnet, dass** die Dockingstationen (20) jeweils eine Ladevorrichtung aufweisen, mittels der ein Akku der Erkennungseinrichtung (17) aufladbar ist.
